Europäisches Patentamt

European Patent Office

Office européen des brevets

(11) Veröffentlichungsnummer: **0 171 450**

**A1**

(12) # EUROPÄISCHE PATENTANMELDUNG

(21) Anmeldenummer: **84109686.0**

(22) Anmeldetag: **14.08.84**

(51) Int. Cl.⁴: **F 16 L 47/02**

(43) Veröffentlichungstag der Anmeldung:
**19.02.86 Patentblatt 86/8**

(84) Benannte Vertragsstaaten:
**AT BE CH DE FR GB IT LI LU NL SE**

(71) Anmelder: **Österreichische Salen-Kunststoffwerk Gesellschaft m.b.H.**
**Kaiserstrasse 45**
**A-1072 Wien(AT)**

(72) Erfinder: **Kistenich, Johann**
**Mitteraustrasse 9**
**A-3500 Krems(AT)**

(72) Erfinder: **Völk, Christian**
**Feldgasse 42**
**A-2460 Bruck/Leitha(AT)**

(54) **Rohrverbindung für Kunststoffrohre und Verfahren zur Herstellung.**

(57) Bei dieser Rohrverbindung für Kunststoffrohre aus nicht schrumpffähigen Kunststoffen, wie vorzugsweise Polybuten, ist ein Muffenkörper (3) vorgesehen, der dem Rohrende (1, 2) gegenüber eine innen konisch ausgebildete Flanke (3a, 3b) besitzt, die der des Rohrendes entspricht (1a, 2a).

Die Verbindung wird hergestellt durch Wärmeeinwirkung auf die Verbindungsstelle. Beispielsweise mittels eines in dem Muffenkörper eingebetteten Heizelementes (4), wodurch eine homogene Verbindung zwischen Muffenkörper (3) und Rohrenden (1) und (2) erzielt wird.

Zur Herstellung der Verbindung wird der Muffenkörper mit einer bestimmten Konizität innen hergestellt, desgleichen wird das einzuschiebende Rohrende mit einer entsprechenden Konizität versehen und so tief in den Muffenkörper (3) eingeschoben, bis kein Hohlraum zwischen beiden mehr verbleibt und ein Preßsitz erreicht ist; dann wird die Wärmequelle für eine bestimmte Zeitspanne eingeschaltet. Sodaß die Innenwandzonen der Muffe und die Außenwandzonen des Rohrendes aufschmelzen und der Werkstoff des Muffenköpers (3) und der Rohrenden (1), bzw. (2), eine innige, homogene Verbindung eingeht.

FIG 1

ROHRVERBINDUNG FÜR KUNSTSTOFFROHRE UND
VERFAHREN ZUR HERSTELLUNG

Die Erfindung bezieht sich auf eine Rohrverbindung für Kunststoffrohre und ein Verfahren zur Herstellung dieser Verbindung, insbesondere einer Rohrverbindung für thermoplastische, nicht schrumpffähige Kunststoffrohre, bei der die zu verbindenden Rohrenden, Fittings, oder dergl. unter Wärmeeinwirkung miteinander eine dichte Verbindung eingehen, wobei die zur Verbindung dienende Muffe entweder Teil eines Rohr- oder Fittingendes, oder ein separates über der Verbindungsstelle der beiden Rohrenden, bzw. Rohrende und Spitzende des Fittings angeordnetes Teil ist.

Solche Rohrverbindungen sind unter der Bezeichnung Schrumpfverbindung, oder Schweißverbindung, respektive Schrumpfmuffe, bzw. (elektrische) Schweißmuffe für schrumpffähige, thermoplastische Kunststoffrohre bekannt. Sie ermöglichen bei der Verwendung von thermoplastischen, schrumpffähigen Kunststoffrohren eine praktisch zu handhabende dichte Verbindung von Rohren untereinander, oder mit Fittingsarmaturen, etc., zum Aufbau von Rohrnetzen. Die Verbindung selbst wird dabei durch Anordnen einer separaten, sogenannten Überschiebmuffe über der Verbindungsstelle dadurch erzeugt, daß in einen zwischen dem inneren Durchmesser der Muffe und dem äusseren Durchmesser der Rohrenden ein geringer Hohlraum verbleibt, der sich zwangsläufig aus den zulässigen Toleranzen des Innen-

A-1072 Wien, Postfach 100, Kaiserstraße 45, Telefon 0222/96 15 01-0 Serie, Telex 131406

durchmessers der Muffe und des Außendurchmessers des Rohres ergibt und der entweder, wie mit der DE-PS 2207060 vorgeschlagen, mit einem verflüssigten Schmelzkleber ausgefüllt und damit der Muffe ihre Schrumpfwärme zuführt, infolgedessen der Schmelzkleber zwischen Rohrende und Muffe eingepreßt wird, wodurch sich eine dichte Verbindung ergibt; oder, wie aus der DE-OS 1479231 hervorgeht, als Schrumpfraum für die Muffe dient.

Dabei ist ein Heizdraht mit zweifacher Isolation vorgeschlagen, der der Verbindungsstelle die Schweißtemperatur und der Muffe die notwendige Schrumpfwärme zuführt.

Verbesserungen hinsichtlich der Anordnung und Ausbildung der Heizdrähte für derartige elektrisch schweißbare Muffen zum Verbinden von Leitungsrohren aus schrumpffähigen, thermoplastischen Kunststoffen sind noch mit der DE-PS 3103305 vorgeschlagen worden, wobei in der Nähe der Innenwandung des Muffenkörpers mehrere Widerstandsheizdrähte angeordnet sind; und mit der DE-PS 3226575, bei der, so wie bei der US-PS 3235289, ein Schweißring in den zwischen Muffenkörper und Rohrende verbleibenden Hohlraum eingeschoben wird und,nach elektrischer Beheizung,den Hohlraum ausfüllt, indem er beide Teile miteinander verbindet.

Diesen bekannten Rohrverbindungen ist gemeinsam, daß sie entweder mit einem Schmelzkleber arbeiten, der dem Muffenkörper die notwendige Schrumpfwärme zuführt, oder diese Schrumpfwärme durch elektrisch beheizte Heizwendel

Diese bekannten Verfahren eignen sich ausschließlich für schrumpffähige, thermoplastische Werkstoffe. Bei anderen Werkstoffen sind Verbindungen dieser Art entweder überhaupt nicht anwendbar,oder, beispielsweise bei der Ausfüllung eines Hohlraumes zwischen Muffe und Rohrende,nicht sicher genug, da eine innige Verbindung zwischen Schmelzkleber und Rohroberfläche nicht eintritt und zusätzlich die Pressung der Schrumpfmuffe fehlt.

Für nicht schrumpffähige, thermoplastische Kunststoffe, wie beispielsweise Polybuten, können nur sehr aufwendige mechanische Überschiebmuffen verwendet werden, die durch zusätzliche Armaturen die notwendige Sicherheit erfahren, oder Schweißverbindungen, bei denen entweder die zu verbindenden Rohrenden stirnseitig durch Beheizung auf Schmelztemperatur gebracht und dann aufeinandergepreßt werden (Stumpfschweißung), oder bei Ausbildung eines der zu verbindenden Enden in Form einer Muffe durch Beheizung der Innenoberfläche der Muffe und der Außenfläche des Rohres und nachträgliches Ineinanderschieben (Muffenschweissung). In beiden Fällen ist während des Schweißvorganges eine Relativbewegung der zu verbindenden Teile notwendig, für die es oftmals bei Verlegung im engen Raum keinen ausreichenden Platz gibt.

Der Erfindung liegt daher die Aufgabe zugrunde für aus nicht schrumpffähigen, thermoplastischen Kunststoffen, wie besonders Polybuten, bestehenden Rohren eine dichte, wirtschaftliche und auf der Baustelle einfach herzustellende Rohrverbindung zu schaffen.

Gemäß der Erfindung wird diese Aufgabe dadurch gelöst, daß der über der Verbindungsstelle angeordnete Muffenkörper innen eine Konizität besitzt, die derjenigen des äußeren Umfanges des, bzw. der Rohrenden entspricht, zwischen Muffenkörper und Rohrenden ein spaltfreier Preßsitz vorgesehen ist, und durch Wärmeeinwirkung zwischen dem Muffenkörper und den Rohrenden eine homogene Schweißverbindung erzeugt ist.

Vorteilhafterweise ist in die Innenseite des Muffenkörpers ein Heizelement eingelassen.

Vorteilhafterweise ist das Heizelement ein elektrisches Heizelement.

Vorteilhafterweise ist das elektrische Heizelement ein Widerstandselement.

Vorteilhafterweise ist das Widerstandselement eine elektrische Heizwendel.

Vorteilhafterweise ist das Heizelement mit dem gleichen Werkstoff beschichtet, aus dem der Muffenkörper und die zu verbindenden Rohre bestehen.

Vorzugsweise ist dieser Werkstoff Polybuten.

Bei dem Verfahren zur Herstellung einer erfindungsgemäßen Rohrverbindung erzeugt man zunächst einen Muffenkörper mit einer definierten inneren Konizität und versieht die zu verbindenden Rohrenden an ihrem äußeren Umfang mit einer entsprechenden Konizität, anschließend führt man das, bzw. die Rohrenden in den Muffenkörper so tief ein, bis kein freier Raum zwischen beiden verbleibt und ein Preßsitz erzielt ist, der bis zum Ende des Verfahrensablaufes mittels einer Spannzange oder dergl. aufrecht erhalten bleiben kann, danach läßt man eine Wärmequelle so lange auf die Verbindungsstelle einwirken, bis der Muffenkörper mit dem, bzw. den Rohrenden eine homogene Verbindung eingegangen ist.

Erfindungsgemäß läßt man die Wärmequelle für eine jeweils vorgegebene Zeit auf die Verbindungsstelle einwirken.

Erfindungsgemäß ordnet man die Wärmequelle außerhalb des Muffenkörpers an und läßt diese von außen auf die Verbindungsstelle einwirken.

Erfindungsgemäß bettet man die Wärmequelle in den Muffenkörper ein.

Erfindungsgemäß ordnet man die Wärmequelle im inneren Umfang des Muffenkörpers gegenüber dem mit diesem zu verbindenden Rohrende an.

Die mit der Erfindung erzielten Vorteile sind im wesentlichen darin zu sehen, daß bei aus nicht schrumpffähigen Kunststoffen, insbesondere Polybuten, hergestellten Rohren, Profilen, oder dergl., eine dichte homogene Verbindung frei von Spannungen, auch bei unterschiedlichen Fertigungstoleranzen der zu verbindenden Teile, herstellbar ist.

Ein weiterer Vorteil ist darin zu sehen, daß die Verbindung ohne weiteres auf Baustellen, auch in engen Gräben, ohne weiteres von nicht ausgebildetem Personal auf einfache Weise wirtschaftlich herzustellen ist.

Schließlich ist ein weiterer Vorteil, daß sowohl die Muffe, als auch die zu verbindenden Rohrenden aus dem gleichen Werkstoff bestehen; d.h., das gesamte Rohrnetz kann somit aus dem gleichen Werkstoff aufgebaut werden, ohne das für Muffen und Rohre unterschiedliche Werkstoffe Verwendung finden müssen.

Die Erfindung ist nachstehend anhand eines in den Abbildungen dargestellten Ausführungsbeispieles näher erläutert.

Es zeigt:

Figur 1 den Schnitt durch eine Rohrverbindung

Figur 2 den Schnitt durch eine Ausführungsvariante der Figur 1.

In den Figuren ist eine Rohrverbindung dargestellt, die aus dem Rohrende 1 und dem Rohrende 2, sowie der über beiden angeordneten Muffe 3, besteht. Der Muffenkörper 3 ist gegenüber den eingesteckten Rohrenden 1 und 2 derart konisch ausgebildet, daß sich zwei, vom Mittelpunkt des Muffenkörpers ausgehende, Flanken 3a und 3b ergeben, die nach außen verlaufen. Die Rohrenden 1 und 2 sind gegenüber diesen konischen Flanken 3a und 3b des Muffenkörpers 3 ebenfalls mit konischen Flächen 1a und 2a versehen. Beim Einstecken der Rohrenden 1 und 2 in den Muffenkörper 3 verbleibt kein Hohlraum zwischen dem Muffenkörper 3 und den Rohrenden 1 und 2, so daß beim Einschieben sich ein Preßsitz ergibt. Die konischen Flanken 3a und 3b des Muffenkörpers sind mit einem Heizelement 4 versehen, beispielsweise einer Heizwendel. Der Draht dieser Heizwendel 4 ist mit einer Hülle 4a umgeben, vorzugsweise einer Beschichtung aus dem gleichen Werkstoff wie der Muffenkörper.

Das Heizelement 4 kann beispielsweise auch aus einem eingebetteten Netz mit einer entsprechenden Beschichtung der Flanken 3a, bzw. 3b bestehen, oder ähnlichen geeigneten Wärmequellen. Es ist auch möglich, mit externen Wärmequellen auf die Verbindungsstelle zwischen dem Muffenkörper 3 und den Rohrenden 1 und 2 einzuwirken. In diesen Fällen kann selbstverständlich das Heizelement 4 entfallen. Auch eine Induktionsheizung, oder dergl. ist einrichtbar.

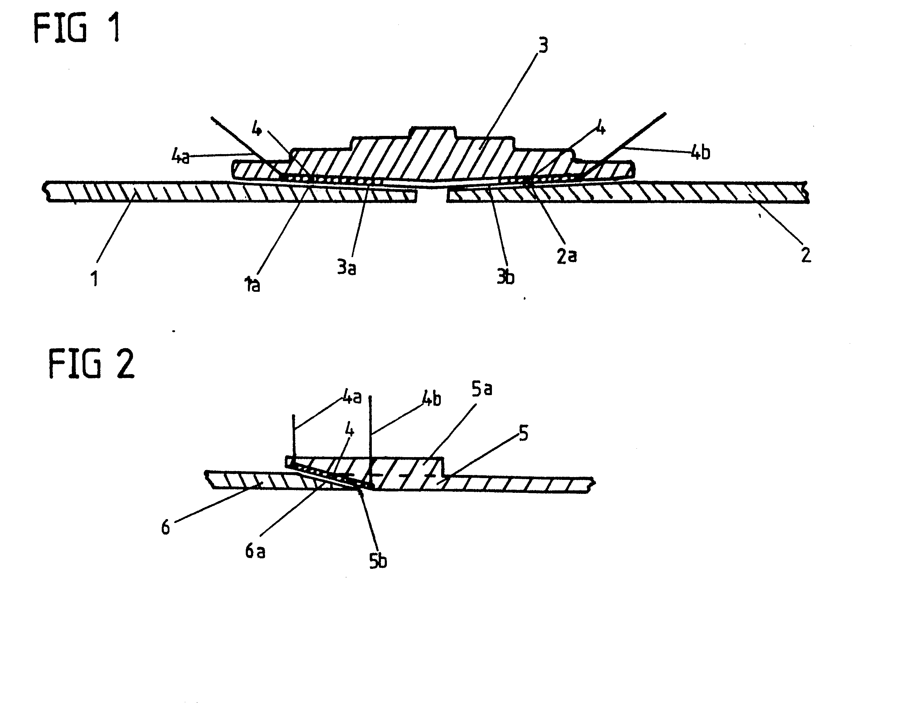

Die in Figur 2 dargestellte Ausführungsvariante zeigt eine Rohrverbindung, bestehend aus einem Rohrende 5 mit daran angesetzten oder davon ausgeformten Muffenkörper 5a. Der Muffenkörper 5a besitzt gegenüber dem einzuschiebenden Rohrende 6 eine konische Flanke 5b, während das Rohrende 6 eine entsprechende Konizität 6a aufweist.

Beispiel für das Herstellen einer erfindungsgemäßen Rohrverbindung für zwei Polybutenrohre mit einem Außendurchmesser von 90 mm:

Der Muffenkörper 3 wird in seiner endgültigen Gestalt im Urformprozeß (Spritzgußverfahren) mitsamt dem Einbetten des Heizelementes 4 erzeugt und die beiden Rohrenden 1 und 2 mit einer Konizität 1a und 2a versehen, die derjenigen des Muffenkörpers 3 entspricht. Die Länge der konischen Abschnitte 3a und 3b, resp. 1a und 2a entspricht dabei der Schweißzone von ca. 37 mm bei einer Konizität von 1,6°. Für das Heizelement 4 wird ein Kupferdraht mit 0,6 mm Durchmesser und einer Länge von 13,2 m (Widerstand $R = 0,84$ Ohm) verwendet, der mit Polybuten beschichtet ist. Nach dem Einführen der Rohrenden 1a und 2a in die Muffe, bis ein Preßsitz erreicht ist, wird an die Enden 4a und 4b des Heizelementes 4 eine Spannung von 24 V für eine Zeit von 124 s angelegt, d.h., der Verbindungsstelle wird eine Schweißenergie von 54500 J bei einer Umgebungstemperatur von 20°C zugeführt, wodurch der Werkstoff des Muffenkörpers 3 und der Rohrenden 1a und 2a schmilzt, ineinanderfließt und eine homogene dichte Verbindung bildet. Nach dem Erkalten ist die Verbindungsstelle fertig und belastbar. Während des Schweißvorganges und bis zum endgültigen Erkalten der Verbindungsstelle kann der Preßsitz zwischen den Rohrenden 1a und 2a, sowie dem Muffenkörper 3, d.h., dessen konischer Innenflächen 3a und 3b durch eine Spannvorrichtung aufrechterhalten werden.

0171450

PATENTANSPRÜCHE

1. Rohrverbindung für Kunststoffrohre und ein Verfahren zur Herstellung dieser Verbindung, insbesondere einer Rohrverbindung für thermoplastische, nicht schrumpffähige Kunststoffrohre, bei der die zu verbindenden Rohrenden (1,2), Fittings oder dergl. unter Wärmeeinwirkung miteinander eine dichte Verbindung eingehen, wobei die zur Verbindung dienende Muffe (3) entweder Teil eines Rohr- oder Fittingendes (5a) oder ein separates über der Verbindungsstelle der beiden Rohrenden (1,2), bzw. Rohrende und Spitzende des Fittings angeordneter Muffenkörper (3) ist, dadurch gekennzeichnet, daß der über der Verbindungsstelle angeordnete Muffenkörper (3) innen eine Konizität (3a,3b) besitzt, die derjenigen des äußeren Umfanges (1a,2a) des, bzw. der eingeschobenen Rohrenden (1,2) entspricht, zwischen Muffenkörper und Rohrende (1) ein im wesentlichen spaltfreier Preßsitz vorhanden ist, in diesem Bereich eine durch Wärmeeinwirkung erzeugte homogene Verbindung zwischen dem Muffenkörper (3) und dem, bzw. den Rohrenden (1,2) besteht.

2. Rohrverbindung nach Anspruch 1, dadurch gekennzeichnet, das in die Innenseite des Muffenkörpers (3) ein Heizelement (4) eingelassen ist.

3. Rohrverbindung nach Anspruch 1 und 2, dadurch gekennzeichnet, daß das Heizelement (4) ein elektrisches Heizelement ist.

4. Rohrverbindung nach Anspruch 1 bis 3, dadurch gekennzeichnet, daß das elektrische Heizelement (4) ein Widerstandselement ist.

5. Rohrverbindung, nach Anspruch 1 bis 4, dadurch gekennzeichnet, daß das Widerstandselement eine elektrische Heizwendel (4) ist.

0171450

6. Rohrverbindung nach Anspruch 1 bis 5, dadurch gekennzeichnet, daß das Heizelement (4) mit dem gleichen Werkstoff beschichtet ist, aus dem der Muffenkörper (3) und die zu verbindenden Rohre (1,2) bestehen, vorzugsweise aus Polybuten.

7. Verfahren zur Herstellung einer Rohrverbindung nach Anspruch 1, dadurch gekennzeichnet, daß man zunächst einen Muffenkärper (3) mit einer bestimmten inneren Konizität (3a,3b) erzeugt und die zu verbindenden Rohrenden (1,2) an ihrem äußeren Umfang mit einer entsprechenden Konizität (1a,2a) versieht, anschließend das, bzw. die konischen Rohrenden (1,2) so tief in den Muffenkörper (3) einführt, bis kein freier Raum zwischen beiden verbleibt und ein im wesentlichen spaltfreier Preßsitz erzielt ist, danach eine Wärmequelle so lange auf die Verbindungstelle einwirken läßt, bis die im Bereich des Preßsitzes miteinander in Berührung stehenden Flächen des Muffenkörpers (3) und der Rohrenden (1,2) aufgeschmolzen sindineinanderfließen und miteinander eine homogene Verbindung eingegangen sind.

8. Verfahren nach Anspruch 7, dadurch gekennzeichnet, daß man die Wärmequelle für eine jeweils definierte Zeit auf die Verbindungsstelle einwirken läßt.

9. Verfahren nach Anspruch 7 und 8, dadurch gekennzeichnet, daß man die Wärmequelle außerhalb des Muffenkärpers (3) anordnet und diese von außen auf die Verbindungsstelle einwirken läßt.

10. Verfahren, nach Anspruch 7 bis 9, dadurch gekennzeichnet, daß man die Wärmequelle als Heizelement (4) in den Muffenkörper (3) einbettet.

11. Verfahren nach Anspruch 7 bis 10, dadurch gekennzeichnet, daß man das Heizelement (4) im inneren Umfang des Muffenkörpers (3) gegenüber dem mit diesem zu verbindenden Rohrenden (1,2) anordnet.

FIG 1

3

4

4a

4b

1

1a

3a

3b

2a

2

FIG 2

4a

4b

5a

4

5

6

6a

5b

0171450

**EUROPÄISCHER RECHERCHENBERICHT**

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 061 503   (GOULD et al.)  * Spalte 3, Zeilen 36-61; Figur 8 * | 1-7,10 ,11 | F 16 L   47/02 |
| A | EP-A-0 075 901   (VON ROLL)  * Anspruch 1; Figuren 8,9 * | 1-5,10 ,11 | |
| A | FR-A-1 416 207   (AMERICAN METAL PRODUCTS)  * Figur 5 * | 1 | |
| A | GB-A-2 083 406   (STURM)  * Figur 2 * | 1 | |
| A | DE-U-1 757 878   (DYNAMIT AG)  * Figur 1 * | 1 | RECHERCHIERTE SACHGEBIETE (Int. Cl.4) |
| D,A | DE-C-2 207 060   (STEWING) | | F 16 L   47/00  B 29 C   65/22 |
| D,A | DE-A-1 479 231   (THE FURUKAWA ELECTRIC CO.) | | |
| D,A | DE-C-3 103 305   (VON ROLL) | | |
| D,A | DE-C-3 226 575   (FRIEDRICHSFELD) | | |
|  | --- -/- | | |

Der vorliegende Recherchenbericht wurde für alle Patentansprüche erstellt.

| Recherchenort BERLIN | Abschlußdatum der Recherche 25-03-1985 | Prüfer SCHLABBACH M |
|---|---|---|

## EUROPÄISCHER RECHERCHENBERICHT

Europäisches Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-3 235 289 (JONES) | | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 25-03-1985 | SCHLABBACH M |